# EUROPEAN PATENT SPECIFICATION

(11) **EP 3 351 924 B1**
(45) Date of publication and mention of the grant of the patent: **29.01.2025**
(21) Application number: 16845770.3
(22) Date of filing: 12.09.2016
(51) Int. Cl.: G01N 17/02

(54) **SENSOR FOR MONITORING CORROSION BY MEANS OF MEASUREMENTS OF ELECTROCHEMICAL IMPEDANCE AND NOISE AND OF RESISTANCE TO POLARISATION AND USE OF SAME**
SENSOR ZUR KORROSIONSÜBERWACHUNG MITTELS MESSUNG ELEKTROCHEMISCHER IMPEDANZ UND RAUSCHEN UND POLARISATIONSBESTÄNDIGKEIT SOWIE DESSEN VERWENDUNG
CAPTEUR POUR LA SURVEILLANCE DE LA CORROSION PAR DES MESURES DE L'IMPÉDANCE, DES BRUITS ÉLECTROCHIMIQUES ET DE LA RÉSISTANCE À LA POLARISATION, ET UTILISATION DE CE CAPTEUR

(30) Priority: 18.09.2015 ES 201500674
(43) Date of publication of application: 25.07.2018
(73) Proprietor: Universidad Complutense De Madrid, 28040 Madrid (ES)
(72) Inventor: SANTOS BARAHONA, Hector, 28040 Madrid (ES); DE MIGUEL GAMO, María Teresa, 28040 Madrid (ES); LASANTA CARRASCO, María Isabel, 28040 Madrid (ES); GARCÍA MARTÍN, Gustavo, 28040 Madrid (ES); PEREZ TRUJILLO, Francisco Javier, 28040 Madrid (ES)
(74) Representative: Pons
(86) International application number: PCT/ES2016/000097
(87) International publication number: WO 2017/046427

(56) References cited:
- WO-A1-83/03007
- CN-A- 103 149 146
- CN-U- 202 471 565
- JP-A- 2010 060 518
- US-A- 4 196 057
- US-A- 4 196 057
- US-A1- 2005 212 534
- US-A1- 2010 126 859

## Description

### Field of the invention

The present invention relates to a sensor for performing measurements of electrochemical impedance and noise, and of resistance to polarisation; through these measurements it is possible to assess the development of the corrosion of one or several materials exposed to different corrosive industrial atmospheres, both at low and high temperature. In this last case, more specifically, this monitoring system is suitable for industrial or process atmospheres wherein a melted, gas or liquid phase is present, be it, for example, from metals, alloys, salts or glass, all in melted state.

### State of the art

The corrosion occurring in industrial equipment is one of the main causes of loss of production up-time and the increase in costs associated to operating maintenance. In this respect, it is vital to incorporate tools or criteria in the plant control systems which facilitate decision-making, particularly regarding synchronisation of the scheduled programmes for shutdown, repair and replacement of different units or parts of the installation.

The most conventional technique, which continues to be used to date, is the exposure of corrosion coupons to the corrosive medium. The coupons are regularly inspected and analysed, determining their weight loss, wherefrom a general corrosion rate is calculated. They are also examined by microscope to identify possible points of localised corrosion. This method involves investing a considerable amount of time and does not enable exactly determining the temporal evolution of the corrosion, since, operationally, it is not possible to remove the corrosion coupons with sufficient frequency.

Document WO2005/054821 discloses a system for measuring corrosion based on another conventional technique, that of electrical resistance. It relates to a system formed by a rectangular metal element of known dimensions, exposed to a corrosive atmosphere and connected to an electrical resistance measurement system and which also includes a temperature sensing device and a pressure sensor which means these two variables can be monitored. The invention is based on determining the corrosion in the ratio existing between the electrical resistance of the element and its mass.

Document US3772178 discloses an electrode manufactured in the form of a solid metal bar with one threaded end, which allows its joining to a metal base electrically connected to a measurement system. The system is designed to include three electrodes of this type, which will have the same surface area and surface characteristics; its objective is to monitor corrosion by means of electrical polarisation measurements.

Patent GB2006437 relates to a system formed by a cell which will contain a corrosive liquid, a piece of metal of a known surface area, which will operate as a working electrode, a reference electrode and a system capable of generating electrical current. It also discloses a method for determining the corrosion of the metal based on the anodic and cathodic Tafel slopes, from which the corrosion current density is obtained and, from the latter, it is possible to calculate the corrosion rate.

The main drawback of all the previously disclosed techniques is that it is only possible to give reliable general corrosion information, so that, should localised corrosion occur, the system could not detect it.

Document WO02056035 relates to a sensor for monitoring corrosion in industrial equipment by means of electrochemical impedance measurements, which is formed by two electrodes and two conductor wires embedded in a pure epoxy resin. The epoxy resin provides the necessary electrical insulation characteristics; however, the sensor's sensitivity depends on the atmosphere and the point of the industrial plant where it is necessary to monitor the corrosion.

Document US2005/0212534A1 discloses a method and apparatus for monitoring the corrosion of a working electrode. An alternating perturbation signal of at least one frequency is applied to the working electrode. A signal representing the response of the working electrode to the applied perturbation signal is monitored. A measure of the impedance of the working electrode is derived form the applied perturbation signal and the response signal.

Document US4196057A discloses a cold end corrosion rate measuring probe consisting of a corrosion rate meter probe modified by the addition of a cooling jacket and a temperature measuring device such as a thermocouple.

Despite all the systems developed to monitor corrosion of industrial equipment, there is still the need for systems which provide reliable and continuous information regarding the corrosive processes occurring in the industrial equipment.

The present invention relates to a sensor that is able to perform joint measurements of electrochemical impedance and noise and resistance to polarisation, enabling continuous, reliable control, both of the general and localised corrosion processes.

### Detailed description of the invention

Sensor for monitoring corrosion by means of measurements of electrochemical impedance and noise and of resistance to polarisation.

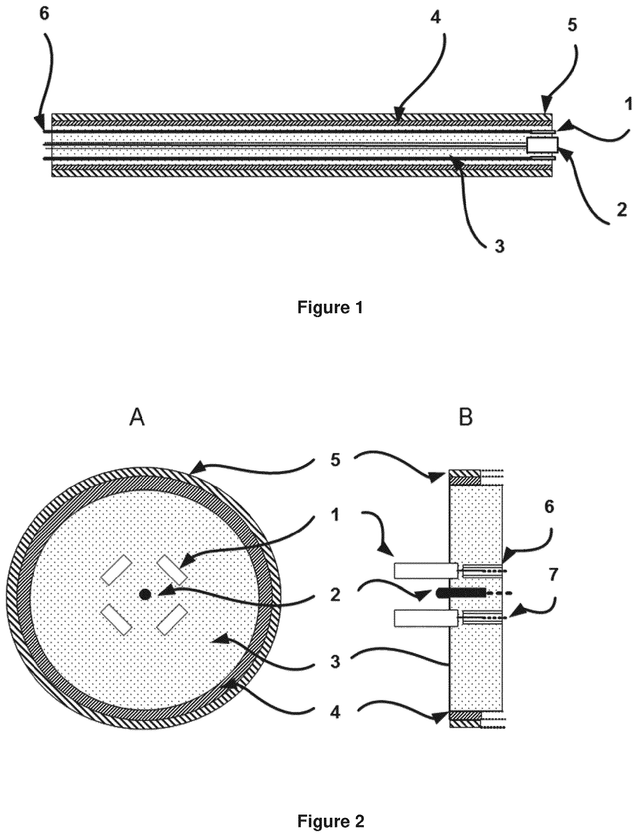

The sensor (Figure 1) comprises at least two electrodes (1) of the same metal material (a primary electrode and another secondary electrode), a conductor wire (6) for each electrode formed by a conductive metal matrix, a thermocouple (2) located in the front part of the sensor, a filling matrix (3) where the previous elements are embedded, an inner sheath (4) which provides structure to the sensor and the inside of which houses the previous elements, and a protective outer sheath (5) housing the aforementioned elements. Optionally, the sensor may include an integrated and independent cooling system, the sensor may also include a specimen-holding system which act as corrosion coupon specimens.

The electrodes (1) consist of a single metal material, the same as that of the monitored plant equipment.

The thermocouple (2) is disposed along the longitudinal axis of the sensor with the aim of achieving a reliable record of the electrode temperature, verifying correspondence with the operating conditions of interest. The incorporation of the thermocouple in the corrosion sensor provides advantages, both from a corrosion monitoring standpoint and from a purely operating standpoint, since it allows controlling temperature difference from one point to another of the installation, and disturbances that may arise in the same point throughout the operating time. It especially allows, at the same time, controlling temperature transients which may affect the corrosive potential. From an industrial installation operating standpoint, it also provides the possibility of controlling the temperature at points where there is no temperature control instrumentation. The sensor body core consists of a filling matrix (3), in order to avoid electrical contact between the conductor wires and the thermocouple which run through the sensor. Said filling matrix consists of electrically insulating material, such as oxide-based ceramic material, e.g. aluminosilicate.

According to the present invention, a compound which provides electrical conductivity to improve the sensitivity of the sensor during the measurements of the properties of interest (electrochemical impedance and noise, and resistance to polarisation) is added to the insulating material of the filling matrix (3), as additive. This material is added on the exposed surface to the medium where the measurement is performed. Preferably, but in a non-limiting manner, the additive added shall be graphite-based particles of a size in the range of 0.1-45 µm and it shall be added during preparation of the insulating filling in the range of 0.1-10% by weight for a certain length and, therefore, volume of the sensor body. According to the present invention, this length, and, therefore, volume of the sensor body which will incorporate filling of an insulating material with the additive, to improve the sensitivity of the sensor in the measurements of electrochemical impedance and noise, is up to one millimetre from the "last section of the filling matrix". "Last section of the filling matrix" is defined as the section of the sensor body situated in the front part of the sensor and which, together with the electrodes' surface, gives rise to the surface in contact with the corrosive atmosphere. Depending on the sensor's location in the plant and the needs to increase measurement sensitivity, the length and, therefore, the volume of the sensor body which will be filled with insulating material added with the additive to improve sensor sensitivity, shall be defined in each specific application.

The specific composition of the filling matrix (3) must be such that it minimises any total or partial dissolution phenomenon of the filling matrix inside the operating fluid of interest, particularly in processes at high or very high temperature, in the presence of fluid phases such as metals, alloys, salts or glass, all in melted state.

This filling matrix is contained by an inner sheath (4) of an electrical insulating material, e.g. ceramic based.

To adapt this sensor to the conventional insertion ports and similar, another outer sheath (5) is disposed on the inner sheath (4), consisting of metal materials in order to give sufficient mechanical entity to the sensor to allow its handling and installation in the insertion ports and similar using for this, for example, a conventional flange joint. The function of this cover or outer sheath is to give the sensor mechanical resistance for its use in any atmosphere. The sensor described in this invention may be located in industrial equipment where it will be frequently exposed to climatological conditions such as rain, wind, vibrations of the equipment, etc., so that it is extremely important to provide the sufficient structural integrity which guarantees its durability during long periods of time.

The electrodes are connected to the rest of the auxiliary equipment by means of respective conductor wires (6) which longitudinally run through the sensor. The conductor wires extend from the base of the electrodes to completely pass through the sensor body, a part thereof remaining outside to allow cable connection to the auxiliary equipment (more particularly, a potentiostat) for electrochemical impedance and noise measurements, as well as resistance to polarisation. During the tests of these properties of interest, the electrical signal generated by the potentiostat circulates through the conductor wires to the surface of the electrodes in contact with the corrosive medium and through them, equally, it collects the electrical signal generated as a response.

The sensor disclosed in the present invention is applicable both to process media with low operating temperatures and with high and very high temperatures. In this last case, particularly, the monitoring system is suitable for industrial or process atmospheres wherein a fluid, gas or liquid phase is present be it, for example, from metals, alloys, salts or glass, all in melted state.

In another application of this invention, the sensor may be used for the selection between different materials, performing comparative monitoring of the corrosion of the materials of interest when they are exposed to a certain corrosive atmosphere and at a certain temperature. In this particular case, the sensor will have as many sets of primary and secondary electrodes as materials to assess in a certain corrosive atmosphere.

In another particular embodiment, the sensor may also have in its head a specimen holder system which act as corrosion coupon specimens.

### Brief description of the figures

Figure 1 illustrates a longitudinal section of a general embodiment of the sensor for monitoring corrosion.
Figure 2 illustrates a cross-section of a particular embodiment of the sensor shown in Figure 1, embodiment aimed at monitoring the corrosion of several metals in parallel.
Figure 3 illustrates a cross-section of a particular embodiment of the sensor for the insertion of a set of corrosion coupon specimens.
Figure 4 illustrates a longitudinal section of a particular embodiment of the sensor for monitoring the corrosion of several materials in parallel at high temperature, including both an external (A) and internal (B) cooling variant, according to the particular needs of each installation monitored, and according to the practical possibilities of adaptation of the sensor to the available insertion port.
Figure 5 shows the electrochemical impedance curve EIS obtained with the sensor claimed immersed in a mixture of melted salts. The details of this graph adjust to a particular circuit which corresponds to the corrosion mechanism by means of porous layer.

### Embodiment of the invention

The present invention is additionally illustrated by means of the following examples, which do not aim to be limiting of its scope.

### Example 1.

This example shows a particular embodiment of the invention which allows monitoring the corrosion of several materials in parallel.

In this particular case, the sensor has two sets of primary and secondary electrodes to assess two materials with a certain corrosive atmosphere.

Figure 2 shows both a detail of the cross-section (A) and the longitudinal section (B), of the sensor head, i.e. the front part which is inserted in the operating medium of interest. Both the primary electrode and the secondary electrode must have the same dimensions, since either of the two will function as working electrode and either of the two will function as reference and auxiliary electrode jointly. It is, therefore, necessary that the electrodes have the same dimensions and the sensor symmetry is maintained.

The distribution of the electrodes, with respect to the rest of the sensor section in contact with the corrosive medium of interest, shall be such that possible condensations of the atmosphere are minimised, in this case based on vapor or gas, on the surface of the electrodes. This particular embodiment is optimal to reduce the errors induced in electrochemical measurements, and in the measurement of resistance to polarisation. In the event that the corrosive medium of interest is liquid, it is convenient to increase the length of the electrodes in order to separate their front part from the sensor body, optimising measurement of the properties of interest.

As a particular design alternative (Figure 2B), it is possible to apply around the conductor wires, a modular series of hollow cylindrical parts that act as modular electrical insulators (7), of composition similar to the inner sheath (4), allowing flexibilization of dosing of the insulating matrix (3). The latter is of special interest in the case of having particular sensor design variants, which include an internal cooling system.

### Example 2.

This example shows a particular case of embodiment of the invention where the sensor head contains a specimen-holder system which acts as corrosion coupon specimens.

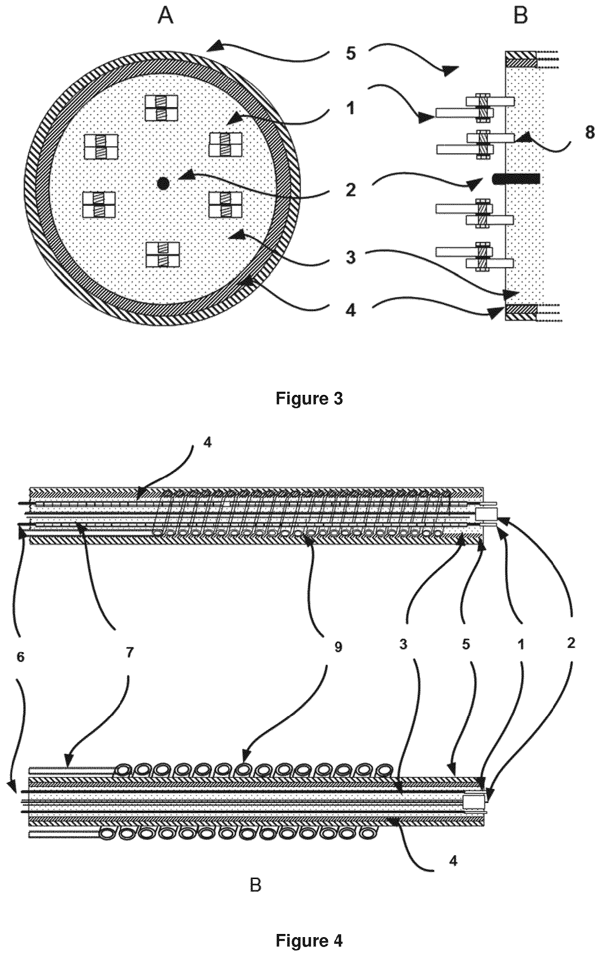

Figure 3 shows both a detail of the cross-section (A) and of the longitudinal section (B) of a sensor which has six specimen holders (8) for the corrosion coupons so that these corrosion coupons (materially identical to the material of interest) are fixed by means of a conveniently insulated threaded joint to the specimen holder, their base being embedded in the filling matrix (3). In the case of variant (A), it includes a typical application of the modular elements (7).

### Example 3.

This example relates to a particular design of the sensor aimed at high-temperature applications.

Hence, two design variants are incorporated in the cooling system (9), independent and exclusive of the sensor, and possible cooling systems present in the installation monitored may be auxiliary. Figure 4 shows these two variants: an external cooling variant (A) and an internal cooling variant (B), applicable depending on the complementary cooling requirements, and according to the limitations in the adaption of the sensor to the apparatus of interest.

### Example 4.

This example relates to the measurement obtained with the sensors described.

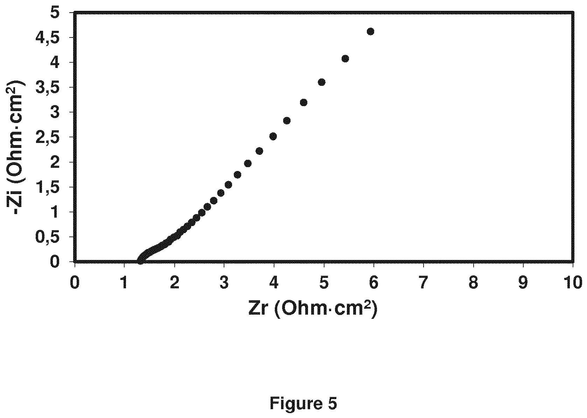

Figure 5 shows the electrochemical impedance (EIS) curve obtained in a titanium corrosion test during 100 hours with the sensor immersed in melted salts with sulphate-chloride base.

The curve is composed of a very small semicircle at high frequencies, follows by a straight-line until low frequencies, which means that the corrosion process is very accelerated and that the limiting stage is the diffusion of the species in the double layer.

The data obtained in the EIS curve can be adjusted with the following equivalent circuit:

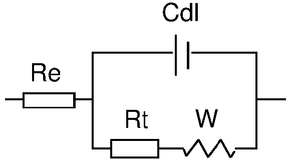

Where Re is the electrolyte resistance, Cdl is the capacitance of the double layer, Rt is the load transfer resistance and W is Warburg resistance.

## Claims

1. Sensor for monitoring corrosion of an equipment in a medium comprising:
- at least one primary electrode (1) and one secondary electrode (1) for the measurement of electrochemical impedance and noise and of resistance to polarisation, formed by the same metal material as that of the monitored equipment,
- a conductor wire (6) for each electrode (1),
- a thermocouple (2) disposed along the longitudinal axis of the sensor,
- a sensor body comprising a filling matrix (3) of an electrically insulating material, where the previous elements are embedded, said filing matrix (3) preventing electrical contact between the conductor wires (6) and the thermocouple (2),
- an inner sheath (4), inside which the previous elements are housed,
- a protective outer sheath (5) which houses the previous elements, and the sensor being **characterized in that** it additionally comprises:
- a compound added to the filling matrix (3) that provides electrical conductivity to improve the sensor's sensitivity, said compound being added to an exposed surface where the measurement is performed to a depth of one millimetre from a last section of the filling matrix which is situated in a front part of the sensor body which together with the electrodes' (1) surface, give rise to the surface in contact with the medium.

2. Sensor for monitoring corrosion, according to claim 1, where the insulating material is an oxide-based ceramic material.

3. Sensor for monitoring corrosion, according to any of the preceding claims, where the compound is graphite-based particles of a size between 0.1 and 45 µm.

4. Sensor for monitoring corrosion, according to any of the preceding claims, where the compound is added to the insulating filling matrix (3) in a proportion between 0.1 and 10 % by weight.

5. Sensor for monitoring corrosion, according to claim 1, where the inner sheath (4) is of a heat-insulating material, e.g., ceramic-based.

6. Sensor for monitoring corrosion, according to claim 1, where the outer sheath (5) consists of metal materials.

7. Sensor for monitoring corrosion, according to claim 1, where the conductor wires (6) are connected by means of cables to auxiliary equipment to the sensor.

8. Sensor for monitoring corrosion, according to claim 7, where the auxiliary equipment is a potentiostat.

9. Sensor for monitoring corrosion, according to claim 1, further comprising, specimen holders (8) for corrosion coupons.

10. Sensor for monitoring corrosion, according to any of the preceding claims further comprising a cooling system (9).

11. Sensor for monitoring corrosion, according to any of the preceding claims, where the electrodes (1) have the same dimensions.

12. Use of the sensor according to any of the claims 1-11 for local monitoring of corrosion in industrial installations.

13. Use of the sensor according to any of the claims 1-11 as corrosion coupon.

14. Use of the sensor according to any of the claims 1-11 for comparative monitoring of the corrosion of different materials.

## Patentansprüche

1. Sensor zur Korrosionsüberwachung einer Ausrüstung in einem Medium, umfassend:
- mindestens eine Primärelektrode (1) und eine Sekundärelektrode (1) zur Messung der elektrochemischen Impedanz und des Rauschens sowie der Polarisierungsbeständigkeit, die aus demselben Metallmaterial wie die überwachte Ausrüstung gebildet sind,
- einen Leiterdraht (6) für jede Elektrode (1),
- ein entlang der Längsachse des Sensors angeordnetes Thermoelement (2),
- einen Sensorkörper, der eine Füllmatrix (3) aus einem elektrisch isolierenden Material umfasst, in das die vorhergehenden Elemente eingebettet sind, wobei die Füllmatrix (3) einen elektrischen Kontakt zwischen den Leiterdrähten (6) und dem Thermoelement (2) verhindert,
- eine Innenhülle (4), in der die vorhergehenden Elemente untergebracht sind,
- eine schützende Außenhülle (5), in der die vorhergehenden Elemente untergebracht sind, und wobei der Sensor **dadurch gekennzeichnet ist, dass** er zusätzlich umfasst:
- einen der Füllmatrix (3) hinzugefügten Verbundstoff, der elektrische Leitfähigkeit bereitstellt, um die Empfindlichkeit des Sensors zu verbessern, wobei der Verbundstoff einer freiliegenden Oberfläche hinzugefügt ist, an die Messung bis zu einer Tiefe von einem Millimeter von einem letzten Abschnitt der Füllmatrix aus durchgeführt wird, der sich in einem vorderen Teil des Sensorkörpers befindet, die zusammen mit der Oberfläche der Elektroden (1) die mit dem Medium in Kontakt stehende Oberfläche bilden.

2. Sensor zur Korrosionsüberwachung nach Anspruch 1, wobei das isolierende Material ein Keramikmaterial auf Oxidbasis ist.

3. Sensor zur Korrosionsüberwachung nach einem der vorhergehenden Ansprüche, wobei der Verbundstoff aus Partikeln auf Graphitbasis mit einer Größe zwischen 0,1 und 45 µm besteht.

4. Sensor zur Korrosionsüberwachung nach einem der vorhergehenden Ansprüche, wobei der Verbundstoff der isolierenden Füllmatrix (3) in einem Anteil zwischen 0,1 und 10 % Gewichtsprozent zugesetzt ist.

5. Sensor zur Korrosionsüberwachung nach Anspruch 1, wobei der Innenmantel (4) aus einem wärmeisolierenden, z. B. keramikbasierten, Material besteht.

6. Sensor zur Korrosionsüberwachung nach Anspruch 1, wobei der Außenmantel (5) aus metallischen Werkstoffen besteht.

7. Sensor zur Korrosionsüberwachung nach Anspruch 1, wobei die Leiterdrähte (6) über Kabel mit der Hilfsausrüstung des Sensors verbunden sind.

8. Sensor zur Korrosionsüberwachung nach Anspruch 7, wobei die Hilfsausrüstung ein Potentiostat ist.

9. Sensor zur Korrosionsüberwachung nach Anspruch 1, ferner umfassend Probenhalter (8) für Korrosionsproben.

10. Sensor zur Korrosionsüberwachung nach einem der vorhergehenden Ansprüche, ferner umfassend ein Kühlsystem (9).

11. Sensor zur Korrosionsüberwachung nach einem der vorhergehenden Ansprüche, wobei die Elektroden (1) die gleichen Abmessungen aufweisen.

12. Verwendung des Sensors nach einem der Ansprüche 1 bis 11 zur lokalen Korrosionsüberwachung in Industrieanlagen.

13. Verwendung des Sensors nach einem der Ansprüche 1 bis 11 als Korrosionsprobe.

14. Verwendung des Sensors nach einem der Ansprüche 1 bis 11 zur vergleichenden Korrosionsüberwachung bei verschiedenen Materialien.

## Revendications

1. Capteur de surveillance de corrosion d'un équipement dans un milieu comprenant :
- au moins une électrode primaire (1) et une électrode secondaire (1) pour la mesure d'impédance et de bruit électrochimiques et de résistance à la polarisation, formées par le même matériau métallique que celui de l'équipement surveillé,
- un fil conducteur (6) pour chaque électrode (1),
- un thermocouple (2) disposé le long de l'axe longitudinal du capteur,
- un corps de capteur comprenant une matrice de remplissage (3) d'un matériau isolant électriquement, où les éléments précédents sont intégrés, ladite matrice de remplissage (3) empêchant un contact électrique entre les fils conducteurs (6) et le thermocouple (2),
- une gaine interne (4), à l'intérieur de laquelle les éléments précédents sont logés,
- une gaine externe protectrice (5) qui loge les éléments précédents, et le capteur étant **caractérisé en ce qu'**il comprend en outre :
- un composé ajouté à la matrice de remplissage (3) qui fournit une conductivité électrique pour améliorer la sensibilité du capteur, ledit composé étant ajouté à une surface exposée où la mesure est effectuée à une profondeur d'un millimètre à partir d'une dernière section de la matrice de remplissage qui est située dans une partie avant du corps de capteur qui ensemble avec la surface des électrodes (1), donnent lieu à la surface en contact avec le milieu.

2. Capteur de surveillance de corrosion, selon la revendication 1, où le matériau isolant est un matériau céramique à base d'oxyde.

3. Capteur de surveillance de corrosion, selon l'une quelconque des revendications précédentes, où le composé est des particules à base de graphite d'une taille comprise entre 0,1 et 45 µm.

4. Capteur de surveillance de corrosion, selon l'une quelconque des revendications précédentes, où le composé est ajouté à la matrice de remplissage isolante (3) dans une proportion comprise entre 0,1 et 10 % en poids.

5. Capteur de surveillance de corrosion, selon la revendication 1, où la gaine interne (4) est d'un matériau isolant thermique, par exemple, à base de céram ique.

6. Capteur de surveillance de corrosion, selon la revendication 1, où la gaine externe (5) est constituée de matériaux métalliques.

7. Capteur de surveillance de corrosion, selon la revendication 1, où les fils conducteurs (6) sont raccordés au moyen de câbles à un équipement auxiliaire au capteur.

8. Capteur de surveillance de corrosion, selon la revendication 7, où l'équipement auxiliaire est un potentiostat.

9. Capteur de surveillance de corrosion, selon la revendication 1, comprenant en outre, des porte-échantillons (8) pour coupons de corrosion.

10. Capteur de surveillance de corrosion, selon l'une quelconque des revendications précédentes comprenant en outre un système de refroidissement (9).

11. Capteur de surveillance de corrosion, selon l'une quelconque des revendications précédentes, où les électrodes (1) ont les mêmes dimensions.

12. Utilisation du capteur selon l'une quelconque des revendications 1 à 11 pour la surveillance locale de corrosion dans des installations industrielles.

13. Utilisation du capteur selon l'une quelconque des revendications 1 à 11 comme coupon de corrosion.

14. Utilisation du capteur selon l'une quelconque des revendications 1 à 11 pour la surveillance comparative de la corrosion de différents matériaux.
